(19)

Europäisches
Patentamt
European
Patent Office
Office européen
des brevets

(11) **EP 2 800 441 A1**

(12) **EUROPEAN PATENT APPLICATION**
published in accordance with Art. 153(4) EPC

(43) Date of publication:
**05.11.2014 Bulletin 2014/45**

(21) Application number: **13743284.5**

(22) Date of filing: **31.01.2013**

(51) Int Cl.:
**H04W 74/08** (2009.01)

(86) International application number:
**PCT/CN2013/071198**

(87) International publication number:
**WO 2013/113283 (08.08.2013 Gazette 2013/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2012 CN 201210021867**

(71) Applicant: **Huawei Technologies Co., Ltd
Shenzhen, Guangdong 518129 (CN)**

(72) Inventor: **HE, Chuanfeng
Shenzhen
Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(54) **METHOD FOR SELECTING TRANSMISSION TIME INTERVAL AND USER EQUIPMENT**

(57)  The present invention discloses a transmission time interval selection method, which includes: obtaining, by a UE, a power margin according to set transmission power of a current random access preamble, and selecting a corresponding type of TTI according to the power margin. In the method according to the embodiment, because the obtained power margin is obtained in fact according to actual transmission power of the current random access preamble, the power margin is more accurate and selection of a TTI type of an E-DCH resource according to the power margin is more effective. The present invention further discloses a user equipment.

A UE sets transmission power of a to-be-sent random access preamble — S11

Obtain a power margin according to the set transmission power — S12

Select a TTI type of a corresponding E-DCH resource according to the power margin — S13

FIG. 1

EP 2 800 441 A1

## Description

This application claims priority to Chinese Patent Application No. 201210021867.6, filed with the Chinese Patent Office on January 31, 2012, and entitled "TRANSMISSION TIME INTERVAL METHOD BASED ON POWER MARGIN, AND TERMINAL DEVICE", which is incorporated herein by reference in its entirety.

## TECHNICAL FIELD

The present invention relates to the field of wireless communications, and in particular, to a transmission time interval selection method and a user equipment.

## BACKGROUND

The 3$^{rd}$ generation partnership project (3$^{rd}$ Generation Partnership Project, 3GPP), as an important organization in the field of mobile communications, promotes standardization of the third generation (The Third Generation, 3G) technologies, and uplink and downlink service bearers are both based on a dedicated channel (Dedicated Channel, DCH) in an earlier 3GPP protocol version, where uplink and downlink data transmission rates can reach 384 kbps in Release 99 (Release 99, R99).

With development of mobile communications technologies, 3G technologies continuously develop and evolve. To decrease an uplink transmission delay and increase an uplink transmission rate, enhanced random access is introduced, and the enhanced random access enhances random access in 3GPP WCDMA (Wideband Code Division Multiple Access, wideband code division multiple access) R99. The enhanced random access uses an E-DCH (Enhanced Dedicated Channel, enhanced dedicated channel) to replace an RACH (Radom Access Channel, random access channel) to implement uplink transmission.

The enhanced random access includes a random access preamble (preamble) and resource allocation stage, a conflict resolution stage, an E-DCH data transmission stage, and a release stage.

When a MAC (Medium Access Control, medium access control) layer triggers an enhanced random access process, a physical layer needs to select an uplink access timeslot, a signature, and preamble transmission power to transmit a preamble. A signature subset of enhanced random access in Release 8 (Release 8, R8) is classified into an E-DCH resource with a TTI of 2 ms and an E-DCH resource with a TTI of 10 ms according to a length of a TTI (Transmission Time Interval, transmission time interval). When performing random access, a UE selects a required resource type and selects a corresponding preamble signature to initiate a random access process.

In the version R8, TTI types of E-DCH uplink transmission of a UE in a CELL-FACH (Cell Forward Access Channel, cell forward access channel) state and an Idle (idle) state include a TTI of 10 ms and a TTI of 2 ms, that is, an E-DCH uses transmission time intervals of 10 ms and 2 ms to perform uplink transmission, and the TTI types are configured by a network side, that is, one TTI type is fixedly configured for each cell, and when the UE in the CELL-FACH state and the idle state initiates enhanced uplink access, corresponding E-DCH transmission uses a TTI type configured for the cell.

When performing access in the CELL-FACH state, the UE needs to select a TTI according to a certain rule, and currently, the TTI is selected mainly according to a power margin (power margin) principle. Currently, methods for calculating a power margin mainly include the following:

1. The power margin is obtained through calculation according to initial transmission power of a random access preamble (Preamble_Initial_Power), where its calculation formula is as follows:

$$\text{Margin} = \{\min(\text{Maximum allowed UL TX Power}, \text{P\_MAX}) - \max(\text{Preamble\_Initial\_Power}, \text{Preamble\_Initial\_Power} + \Delta P_{p-e})\}$$

,

where $\Delta P_{p-e}$ represents a power bias between access preamble power of last transmission and initial DPCCH (Dedicated Physical Control Channel, dedicated physical control channel) transmission power, Preamble_Initial_Power represents the initial transmission power of the random access preamble, and Maximum allowed UL TX Power represents maximum allowed uplink transmission power of a UE broadcasted by a network side through a system message, and P_MAX represents maximum output power of the UE.

2. The power margin may also be obtained according to a configured serving grant Configured_SG of a network side, where the Configured_SG may be a default SG (Default_SG) or a maximum SG (Max-SG). The Default_SG is a default serving grant configured by a network and may be considered as an initial serving grant or a default serving grant of uplink transmission of a UE; and the Max-SG is a maximum serving grant configured by the network, that is, a maximum serving grant that can be scheduled by the network for the UE. In this method, a calculation formula is as follows: Margin={min (Maximum allowed UL TX Power, P_MAX)-max (Preamble_Initial_Power, Preamble_Initial_Power+$P_{p-e}$ +10*$\log_{10}$(1+Configured_SG))}

3. The power margin may be also obtained according to an E-TFCI (transmission format indication information) in common E-DCH resource configuration broadcasted by a network side through a system broadcast message. The E-TFCI is configured by a higher layer of the network side. According to the reference E-TFCI, a gain factor $\beta_{ed}$ of an E-DPDCH (E-DCH Dedicated Physical Data Channel, E-DCH dedicated physical data channel), and gain factors, namely, $\beta_{ec}$, $\beta_{hs}$, and $\beta_c$, of an E-DPCCH (E-DCH Dedicated Physical Control Channel, E-DCH dedicated physical control channel), an HS-DPCCH (Dedicated Physical Control Channel for High Speed Downlink Shared Channel, dedicated physical control channel for high speed downlink shared channel), and a DPCCH (Dedicated Physical Control Channel, dedicated physical control channel) that are configured by the higher layer of the network side may be obtained. Then a required power margin is obtained according to the following calculation formula:

$$\text{Margin=}\{\min(\text{Maximum allowed UL TX Power}, P\_MAX) - \max(\text{Preamble}\_\text{Initial}\_\text{Power},$$
$$\text{Preamble}\_\text{Initial}\_\text{Power} + P_{p-e} + 10*\log_{10}(1 + \sum(\beta_{ed}/\beta_c)^2 + (\beta_{ec}/\beta_c)^2 + (\beta_{hs}/\beta_c)^2))\} \quad ;$$

or,

$$\text{Margin=}\{\min(\text{Maximum allowed UL TX Power}, P\_MAX) - \max(\text{Preamble}\_\text{Initial}\_\text{Power},$$
$$\text{Preamble}\_\text{Initial}\_\text{Power} + P_{p-e} + 10*\log_{10}(1 + \sum(\beta_{ed}/\beta_c)^2 + (\beta_{ec}/\beta_c)^2))\} \quad .$$

In the foregoing three kinds of methods for calculating a power margin, because transmission power of a UE is obtained through estimation according to initial transmission power of a random access preamble of the UE, the initial transmission power indicates only transmission power for the UE to initiate a random access preamble for the first time; however, in a transmission process of the random access preamble of the UE, if no confirmation indication of a base station is received, its transmission power increases gradually in a unit of step; therefore, a manner in the prior art that a power margin is calculated according to initial transmission power of a UE and then a TTI type is determined according to the calculated power margin is not accurate.

## SUMMARY

Embodiments of the present invention provide a transmission time interval selection method based on a power margin, and a user equipment, so that a TTI type of a corresponding E-DCH resource can be selected according to an accurate power margin.

An embodiment of the present invention provides a transmission time interval selection method based on a power margin, which includes:

setting, by a user equipment, transmission power of a to-be-sent random access preamble when performing random access;
obtaining a power margin according to the transmission power of the to-be-sent random access preamble; and
selecting a transmission time interval type of a corresponding enhanced dedicated channel resource according to the power margin.

Correspondingly, the present invention further provides a use equipment, which includes:

a control module, configured to set transmission power of a to-be-sent random access preamble when the user equipment performs random access;
a power margin obtaining module, configured to obtain a power margin according to the transmission power of the to-be-sent random access preamble; and
a resource selecting module, configured to select a transmission time interval type of a corresponding enhanced dedicated channel resource according to the power margin.

The embodiments of the present invention have the following beneficial effects.

With the transmission time interval selection method based on a power margin, and the user equipment according to the embodiments of the prevent invention, in a random access process, a user equipment sets transmission power of a to-be-sent random access preamble, obtains a power margin according to the transmission power of the to-be-sent random access preamble, and then selects a TTI type of a corresponding E-DCH resource according to the power margin. Because the power margin is obtained according to the transmission power of the to-be-sent random access preamble, that is, the power margin is obtained according to actual transmission power of a random access preamble that is to be sent each time, the obtained power margin is more accurate, so that selection of the TTI type of the E-DCH according to the power margin is more accurate and effective.

**BRIEF DESCRIPTION OF DRAWINGS**

To describe the technical solutions in the embodiments of the present invention or in the prior art more clearly, the accompanying drawings required for describing the embodiments or the prior art are introduced briefly in the following. Apparently, the accompanying drawings in the following description show only some embodiments of the present invention, and persons of ordinary skill in the art may also derive other drawings from these accompanying drawings without creative efforts.

FIG. 1 is a flow chart of a TTI selection method based on a power margin according to an embodiment of the present invention;

FIG. 2 is a schematic diagram of a $ß_{ed}/ß_c$ quantization table in a TTI selection method based on a power margin according to an embodiment of the present invention;

FIG. 3 is a schematic diagram of a $ß_{ec}/ß_c$ quantization table in a TTI selection method based on a power margin according to an embodiment of the present invention; and

FIG. 4 is a function block diagram of a user equipment according to an embodiment of the present invention.

**DESCRIPTION OF EMBODIMENTS**

The technical solutions in the embodiments of the present invention are clearly and completely described in the following with reference to the accompanying drawings in the embodiments of the present invention. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

In a TTI selection method based on a power margin according to an embodiment of the present invention, transmission power of a to-be-sent random access preamble is set, a power margin is calculated according to the set transmission power, and a TTI type of a corresponding enhanced resource is selected according to the power margin obtained through calculation. Because the power margin is obtained according to actual transmission power of a random access preamble that is sent each time, the obtained power margin is more accurate, so that selection of the TTI type of the corresponding E-DCH resource according to the power margin is more accurate and effective.

A network side broadcasts, through a system message, maximum allowed uplink transmission power Maximum allowed UL TX power of a UE, transmission power of a primary common pilot channel Primary CPICH TX power, uplink interference UL interference, a constant value Constant Value, and the like; and at the same time, the UE may obtain maximum output power P_MAX of the UE according to a type of the UE. The UE may obtain initial transmission power of a random access preamble Preamble_Initial_Power according to a parameter obtained from the system message and a result CPICH_RSCP (Common Pilot Channel Received Signal Code Power, common pilot channel received signal code power) of measurement performed by the UE on a CPICH. Its calculation formula is as follows:

Preamble_Initial_Power=Primary CPICH TX Power-CPICR_RSCP+UL interference+Constant Value.

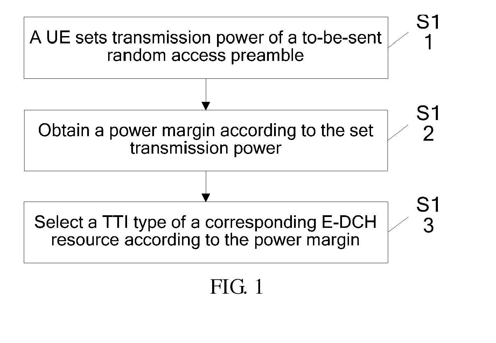

FIG. 1 is a flow chart of a TTI selection method based on a power margin according to an embodiment of the present invention. During specific implementation, the method in this embodiment specifically includes the following steps:

S11: A UE sets transmission power of a to-be-sent random access preamble (Preamble_Transmittied_Power).

When the UE performs random access, Preamble_Initial_Power configured by a higher layer of a network side is usually called initial transmission power, and transmission power for the UE to send a random access preamble for the first time is set according to a minimum allowed power level of the UE and the Preamble_Initial_Power configured by the network side. Specifically, if the Preamble_Initial_Power is smaller than the minimum power level, commanded transmission power of the to-be-sent random access preamble (that is, the random access preamble sent for the first time) (Commanded Preamble Power) is set to be greater than or equal to the Preamble_Initial_Power but smaller than or equal to the minimum allowed power level, and otherwise, the commanded transmission power of the to-be-sent random access preamble (that is, the random access preamble sent for the first time) is set to be equal to the Preamble_Initial_Power; and meanwhile, if the set commanded transmission power is greater than a maximum allowed value, transmission power of the to-be-sent random access preamble (preamble transmission power) is set to be equal to the maximum allowed value; and if the set commanded transmission power is smaller than the minimum power level, the transmission power of the to-be-sent random access preamble is set to be greater than or equal to the Commanded Preamble Power but smaller than or equal to a required minimum power level, and otherwise, the transmission power of the to-be-sent random access preamble is set to be equal to the Commanded Preamble Power. The UE transmits the random access preamble according to the set preamble transmission power.

When detecting an access preamble, the network side performs resource allocation indication through an AICH (Acquisition Indicator Channel, acquisition indicator channel) and an E-AICH (Extended Acquisition Indicator Channel, extended acquisition indicator channel). After the UE receives the indication, the UE performs uplink transmission by using an allocated resource; and if the UE does not receive a confirmation indication of the network side, the UE re-sends a random access preamble until the UE receives a confirmation indication returned by the network side, that is, it needs to send a random access preamble for multiple times. In this process, the UE sets the commanded transmission power of the to-be-sent random access preamble to power obtained by adding a step on the basis of commanded transmission power of a random access preamble that is sent last time, and then repeats the step in the foregoing and sets transmission power (preamble transmission power) of the UE according to the commanded transmission power.

Therefore, in step S11, when the UE does not receive a confirmation indication of the network side, starting from the second time of sending a random access preamble, the UE sets transmission power used for sending a random access preamble that is to be sent each time to power obtained by adding a step to transmission power of a random access preamble that is sent last time,.

S12: Obtain a power margin according to the foregoing transmission power of the to-be-sent random access preamble.

As an embodiment, the power margin may be obtained according to the transmission power of the to-be-sent random access preamble set by the UE, and its calculation formula is as follows:

$$\text{Margin} = \{\min(\text{Maximum allowed UL TX Power}, P\_MAX) - \max(\text{Preamble\_Transmittied\_Power}, \text{Preamble\_transmitted\_Power} + P_{p-e})\}$$

where $\Delta P_{p-e}$ represents a power bias between access preamble power of last transmission and initial DPCCH transmission power.

In another specific embodiment, the power margin may also be obtained according to a configured serving grant (Configured_SG) of the network side with reference to the transmission power of the to-be-sent random access preamble. The Configured_SG may be a default SG (Default_SG) or a maximum SG (Max-SG). The Default_SG is a default serving grant configured by a network and may be considered as an initial serving grant or a default serving grant of uplink transmission of the UE; and the Max-SG is a maximum serving grant configured by the network, that is, a maximum serving grant that can be scheduled by the network for the UE. Its calculation formula is as follows:

$$\text{Margin} = \{\min(\text{Maximum allowed UL TX Power}, P\_MAX) - \max(\text{Preamble\_Transmittied\_Power}, \text{Preamble\_transmitted\_Power} + P_{p-e} + 10 * \log_{10}(1 + \text{Configured\_SG}))\}$$

To make the obtained power margin more accurate, in another specific embodiment, the power margin may be also obtained according to an average serving grant (Average_SG) of the UE in the random access preamble with reference to the transmission power of the to-be-sent random access preamble. Its calculation formula is as follows:

$$\text{Margin} = \{\min(\text{Maximum allowed UL TX Power}, P\_MAX) - \max(\text{Preamble\_Transmittied\_Power}, \text{Preamble\_transmitted\_Power} + P_{p-e} + 10 * \log_{10}(1 + \text{Average\_SG}))\}$$

where the Average_SG may be obtained through calculation according to a state of a buffer that transmits data last time. a condition of transmission power required by a data channel of uplink transmission may be reflected through the Average_SG more accurately, so that the power margin obtained through calculation is more accurate.

In another specific embodiment, the power margin may be also obtained according to transmission format indication information E-TFCI broadcasted by the network side through a system broadcast message with reference to actual transmission power of the to-be-sent random access preamble, which is specifically as follows:

After receiving an E-TFCI delivered by the network side, the UE obtains a gain factor $\beta_{ed}$ of an E-DPDCH according to the E-TFCI. To improve accuracy of gain factors $\beta_{ed}$ of different transmission formats, the network side configures multiple reference transmission formats. When the UE selects a transmission format, a gain factor $\beta_{ed}$ corresponding to the transmission format is determined.

Obtain a gain factor $\beta_c$ of a DPCCH configured by a higher layer of the network side and delivered by a system, and obtain a required power margin through calculation according to the actual transmission power Preamble_Transmittied_Power of the to-be-sent random access preamble. Its calculation formula is as follows:

$$\text{Margin} = \{ \min(\text{Maximum allowed UL TX Power}, P\_MAX) - \max(\text{Preamble\_Transmittied\_Power},$$
$$\text{Preamble\_transmitted\_Power} + P_{p-e} + 10 * \log_{10}(1 + \sum_{k=1}^{m} (\beta_{ed} / \beta_c)_{\text{config}}^2)) \},$$

where m is configured or predefined by the higher layer of the network side and represents the number of E-DPDCH channels; and $(\beta_{ed} / \beta_c)_{\text{config}}$ is obtained according to the E-TFCI configured by the higher layer of the network side.

Definitely, in this embodiment, the power margin may also be obtained not according to the reference E-TFCI, but the power margin is obtained according to a channel parameter configured by the higher layer of the network side with reference to the actual transmission power of the to-be-sent random access preamble, which is specifically as follows: The UE directly obtains the gain factor $\beta_{ed}$ of the E-DPDCH configured by the higher layer of the network side and delivered by the system and the gain factor $\beta_c$ of the DPCCH, then calculates the power margin with reference to the transmission power Preamble_Transmittied_Power of the to-be-sent random access preamble, where its calculation formula is the same as the foregoing formula and a difference is that the $(\beta_{ed} / \beta_c)_{\text{config}}$ is obtained according to a channel parameter configured by the higher layer of the network side.

In this embodiment, the power margin may also be obtained without using the $(\beta_{ed} / \beta_c)_{\text{config}}$ that is obtained according to the channel parameter configured by the higher layer of the network side, and a required power margin may be obtained through calculation by using a predefined $\beta_{ed} / \beta_c$ quantization table. Its formula is as follows:

$$\text{Margin} = \{ \min(\text{Maximum allowed UL TX Power}, P\_MAX) - \max(\text{Preamble\_Transmittied\_Power},$$
$$\text{Preamble\_transmitted\_Power} + P_{p-e} + 10 * \log_{10}(1 + \sum_{k=1}^{m} (\beta_{ed} / \beta_c)_{\text{min}}^2)) \},$$

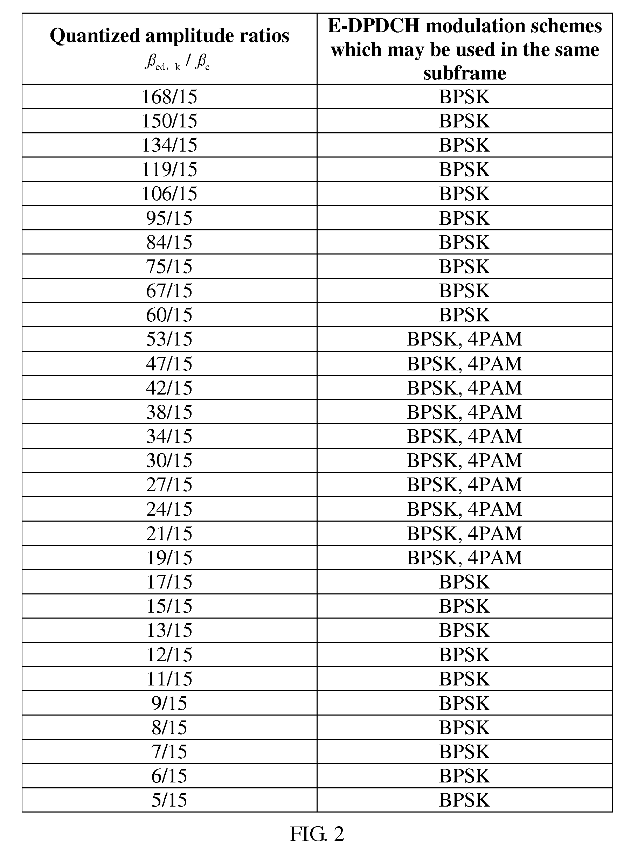

where $\beta_{ed} / \beta_c$ uses a minimum value $(\beta_{ed} / \beta_c)_{\text{min}}$ in the predefined $\beta_{ed} / \beta_c$ quantization table shown in FIG. 2.

During actual implementation, if only one E-DPDCH channel exists, that is, when k = m = 1, correspondingly, a calculation formula of the power margin is as follows:

$$\text{Margin} = \{ \min(\text{Maximum allowed UL TX Power}, P\_MAX) - \max(\text{Preamble\_Transmittied\_Power},$$
$$\text{Preamble\_transmitted\_Power} + P_{p-e} + 10 * \log_{10}(1 + (\beta_{ed} / \beta_c)_{\text{min}}^2)) \};$$

or,

$$\text{Margin} = \{ \min(\text{Maximum allowed UL TX Power}, P\_MAX) - \max(\text{Preamble\_Transmittied\_Power},$$
$$\text{Preamble\_transmitted\_Power} + P_{p-e} + 10 * \log_{10}(1 + (\beta_{ed} / \beta_c)_{\text{config}}^2)) \}.$$

Only transmission power of a data channel is considered in the foregoing embodiment. To be more accurate, power occupied by a control channel E-DPCCH channel may further be considered, the UE further needs to obtain a channel parameter configured by the higher layer of the network side and delivered by the system, that is, a gain factor $\beta_{ec}$ of the E-DPCCH, and correspondingly, a calculation formula of the power margin is as follows:

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\left(\beta_{ed}\ /\ \beta_c\right)^2_{\min}+\left(\beta_{ec}\ /\ \beta_c\right)^2_{\min}))\}\quad;$$

or,

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\left(\beta_{ed}\ /\ \beta_c\right)^2_{\text{config}}+\left(\beta_{ec}\ /\ \beta_c\right)^2_{\text{config}}))\}\quad;$$

or,

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\left(\beta_{ed}\ /\ \beta_c\right)^2_{\text{config}}+\left(\beta_{ec}\ /\ \beta_c\right)^2_{\min}))\}\quad;$$

or,

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\left(\beta_{ed}\ /\ \beta_c\right)^2_{\min}+\left(\beta_{ec}\ /\ \beta_c\right)^2_{\text{config}}))\}\quad,$$

where $\beta_{ed}/\beta_c$ may be obtained according to the E-TFCI or configured by the higher layer of the network side, and definitely, may also use a certain value in a predefined corresponding quantization table; and likewise, the $\beta_{ec}/\beta_c$ may also be configured by the higher layer of the network side, or use a minimum value in the predefined corresponding quantization table.

Only a case of one code channel is considered in all the foregoing formulas; and when multiple code channels exist, correspondingly, a calculation formula of the power margin is as follows:

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\sum_{i}^{m}\left(\beta_{ed}\ /\ \beta_c\right)^2_{\min}+\left(\beta_{ec}\ /\ \beta_c\right)^2_{\min}))\}\quad;$$

or,

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\sum_{k=1}^{m}\left(\beta_{ed}\ /\ \beta_c\right)^2_{\text{config}}+\left(\beta_{ec}\ /\ \beta_c\right)^2_{\min}))\}\quad;$$

or,

$$\text{Margin}=\{\min(\text{Maximum allowed UL TX Power}, P\_MAX) - \max(\text{Preamble}\_\text{Transmittied}\_\text{Power},$$
$$\text{Preamble}\_\text{transmitted}\_\text{Power}+P_{p-e}+10*\log_{10}(1+\sum_{\nu-1}^{m}\left(\beta_{ed}\ /\ \beta_c\right)^2_{\text{config}}+\left(\beta_{ec}\ /\ \beta_c\right)^2_{\text{config}}))\}\quad;$$

or,

$$\text{Margin} = \{\min(\text{Maximum allowed UL TX Power}, P\_MAX) - \max(\text{Preamble\_Transmittied\_Power},$$

$$\text{Preamble\_transmitted\_Power} + P_{p-e} + 10 * \log_{10}(1 + \sum_{k=1}^{m} (\beta_{ed} / \beta_c)^2_{\min} + (\beta_{ec} / \beta_c)^2_{\text{config}}))\} \quad .$$

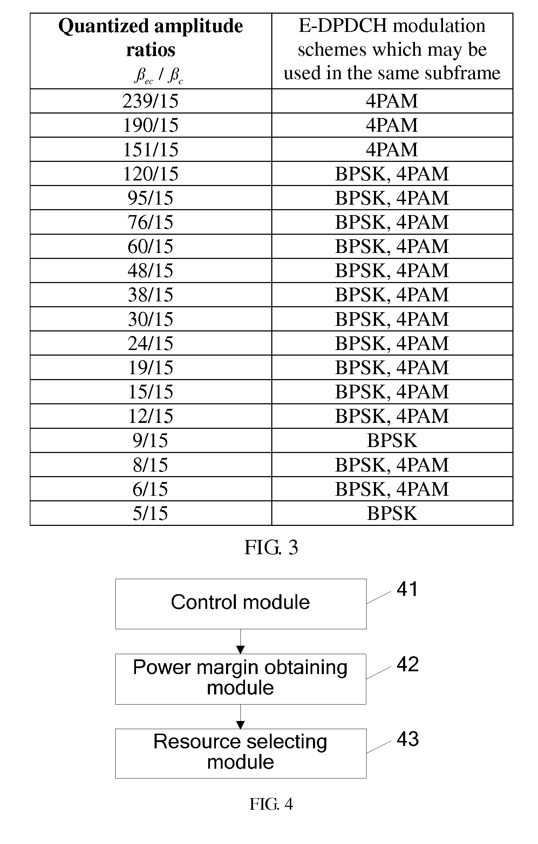

FIG. 3 shows a predefined $\beta_{ec} / \beta_c$ quantization table, where $(\beta_{ec} / \beta_c)_{\min}$ and $(\beta_{ec} / \beta_c)_{config}$ respectively indicate a minimum value in the $\beta_{ed} / \beta_c$ quantization table and a certain value that is obtained according to the channel parameter configured by the higher layer of the network side.

If occupation power of an HS-DPCCH is further considered and then the channel parameter configured by the higher layer of the network side, that is, a gain factor $\beta_{hs}$ of the HS-DPCCH, is obtained, correspondingly, a calculation formula of the power margin is as follows:

$$\text{Margin} = \{\min(\text{Maximum allowed UL TX Power}, P\_MAX) - \max(\text{Preamble\_Transmittied\_Power},$$

$$\text{Preamble\_transmitted\_Power} + P_{p-e} + 10 * \log_{10}(1 + \sum (\beta_{ed} / \beta_c)^2 + (\beta_{ec} / \beta_c)^2 + (\beta_{hs} / \beta_c)^2))\} \quad ,$$

where $\beta_{ed} / \beta_c$ may be a minimum value $(\beta_{ed} / \beta_c)_{\min}$ in a $\beta_{ed} / \beta_c$ quantization table, and may also be a certain value $(\beta_{ed} / \beta_c)_{config}$ that is obtained according to the channel parameter configured by the higher layer of the network side or according to the reference E-TFCI; and $\beta_{ec} / \beta_c$ may also be a minimum value $(\beta_{ec} / \beta_c)_{\min}$ in a $\beta_{ec} / \beta_c$ quantization table or a certain value $(\beta_{ec} / \beta_c)_{config}$ that is obtained according to the channel parameter configured by the higher layer of the network side.

The $\Sigma(\beta_{ed} / \beta_c)^2$ in the foregoing formula is a sum of transmission power of multiple code channels. When only one code channel exists, transmission power of the code channel needs to be estimated, that is, the $\Sigma(\beta_{ed} / \beta_c)^2$ in the foregoing formula is changed to $(\beta_{ed} / \beta_c)^2$.

S13: Select a TTI type of a corresponding E-DCH resource according to the power margin. During specific implementation, when the UE performs random access, enhanced uplink random access may be classified into an E-DCH resource with a TTI of 2 ms and an E-DCH resource with a TTI of 10 ms according to a length of a TTI in R11; therefore, when the UE selects an E-DCH according to the obtained power margin, the UE first determines whether the power margin is greater than or equal to a set threshold, and if yes, the UE selects 2 ms as the length of the TTI of the E-DCH resource, and otherwise, selects 10 ms as the length of the TTI of the E-DCH resource.

In this embodiment, the threshold may be configured by the network side and broadcasted through a system message, or may be predefined by a user.

With the resource selection method based on a power margin according to this embodiment of the present invention, transmission power of a to-be-sent random access preamble is obtained and set, a power margin is obtained according to the set transmission power, and then a TTI type of a corresponding E-DCH is selected according to the power margin. Because the power margin is obtained according to actual transmission power of a random access preamble, it is avoided that a step that is added as the number of times of random access increases is omitted when calculation is performed according to initial transmission power, so that the obtained power margin obtained through calculation in this embodiment is more accurate, and selection of an E-DCH according to the power margin is more effective.

Corresponding to the foregoing method embodiment, an embodiment of the present invention further provides a user equipment, and the user equipment in the embodiment of the present invention is described in detail in the following with reference to FIG. 4 and a specific embodiment.

FIG. 4 is a function block diagram of a user equipment according to an embodiment of the present invention. During specific implementation, the user equipment in this embodiment includes:

A control module 41 is configured to set transmission power of a current random access preamble when the user equipment performs random access, where in a process that the UE performs random access, Preamble_Initial_Power configured by a higher layer of a network side is usually called initial transmission power, and transmission power for the UE to send a random access preamble for the first time is set according to a minimum allowed power level of the UE and the Preamble_Initial_Power configured by the network side. Specifically, if the Preamble_Initial_Power is smaller than the minimum power level, commanded transmission power of the current random access preamble (that is, the random access preamble sent for the first time) (Commanded Preamble Power) is set to be greater than or equal to the Preamble_Initial_Power but smaller than or equal to the minimum allowed power level, and otherwise, the commanded transmission power of the current random access preamble (that is, the random access preamble sent for the first time) is set to be equal to the Preamble_Initial_Power; and meanwhile, if the set commanded transmission power is greater than a maximum allowed value, the transmission power of the current random access preamble (preamble transmission power) is set to be equal to the maximum allowed value; and if the set commanded transmission power is smaller than the minimum power level, the transmission power of the current random access preamble is set to be greater than or equal to the Commanded Preamble Power but smaller than or equal to a required minimum power level, and otherwise, the transmission power of the current random access preamble is set to be equal to the Commanded Preamble Power. The UE transmits the random access preamble according to the set preamble transmission power. After the UE receives the indication, the UE performs uplink transmission by using an allocated resource; and if the UE does not receive a confirmation indication of the network side, the UE re-sends a random access preamble until the UE receives a confirmation indication returned by the network side, that is, it needs to send a random access preamble for multiple times. In this process, the commanded transmission power of the current random access preamble is obtained by adding a step on the basis of commanded transmission power of a random access preamble that is sent last time, and then the step described in the foregoing is repeated, and transmission power (preamble transmission power) of the UE is set according to the commanded transmission power. During specific implementation, the control module 41 specifically includes:

a transmission power setting sub-module, configured to set the transmission power of the current random access preamble when the user equipment performs random access; and

a parameter obtaining sub-module, configured to obtain a configured serving grant Configured_SG of the network side, or an average serving grant Average_SG, or a reference E-TFCI broadcasted by the network side, or a channel parameter configured by the higher layer of the network side.

A power margin obtaining module 42 is specifically configured to obtain a power margin according to set transmission power of a to-be-sent random access preamble, and the serving grant Configured_SG, or the average serving grant Average_SG, or the reference E-TFCI, and the channel parameter configured by the higher layer of the network side; that is, the power margin obtaining module 42 may obtain the power margin according to the set transmission power of the random access preamble with reference to any one of the following: the Configured_SG, the Average_SG, and the channel parameter configured by the higher layer of the network side, or obtain the transmission power according to the set transmission power with reference to the reference E-TFCI and the channel parameter configured by the higher layer of the network side. During specific implementation, the power margin obtaining module 42 includes: a gain factor obtaining sub-module, configured to obtain, according to the reference E-TFCI broadcasted by the network side, or directly obtain a gain factor $\beta_{ed}$ of an enhanced dedicated physical data channel configured by the network side, and obtain gain factors, namely, $\beta_{ec}$, $\beta_c$, and $\beta_{hs}$, of an E-DCH dedicated physical control channel, a dedicated physical channel, and a dedicated physical control channel for high speed downlink shared channel that are configured by the higher layer of the network side; and a power margin calculating sub-module, configured to obtain the power margin according to the transmission power of the to-be-sent random access preamble, the $\beta_{ed}$, and the $\beta_c$ or obtain the power margin according to the transmission power of the to-be-sent random access preamble, the $\beta_{ec}$, the $\beta_{ed}$, and the $\beta_c$, or obtain the power margin according to the transmission power of the to-be-sent random access preamble, the $\beta_{ec}$, the $\beta_{ed}$, the $\beta_c$, and the $\beta_{hs}$. The power margin calculating sub-module may also directly obtain the power margin according to the transmission power of the to-be-sent random access preamble; however, to obtain the power margin more accurately, the power margin calculating sub-module calculates the power margin according to the transmission power of the to-be-sent random access preamble with reference to the gain factor of the enhanced dedicated physical data channel and the like, so that selection of a TTI type of a corresponding resource according to the power margin obtained through calculation is more accurate and effective.

A resource selecting module 43 is configured to select a transmission time interval type of a corresponding enhanced dedicated channel E-DCH resource according to the power margin. During specific implementation, the resource selecting module 43 specifically includes:

a determining sub-module, configured to determine whether the power margin is greater than or equal to a set threshold; and

a selecting sub-module, configured to select 2 ms as the transmission time interval TTI of the E-DCH resource when a determination result of the determining sub-module is that the power margin is greater than or equal to the set threshold; or select 10 ms as the transmission time interval TTI of the E-DCH resource when a determination result of the determining sub-module is that the power margin is smaller than the set threshold.

With the user equipment according to this embodiment of the present invention, a control module sets transmission power of a to-be-sent random access preamble, and a power margin obtaining module obtains a power margin according to the set transmission power, and finally, a resource selecting module selects an E-DCH resource according to the power margin. Because the power margin is obtained according to actual transmission power of the random access preamble, it is avoided that a step that is added as the number of times of random access increases is omitted when calculation is performed according to initial transmission power, so that the obtained power margin obtained through calculation in this embodiment is more accurate, and selection of an E-DCH according to the power margin is more effective.

The foregoing descriptions disclose only exemplary embodiments of the present invention and definitely are not intended to limit the scope of the claims of the present invention. Persons of ordinary skill in the art may understand and implement all or a part of procedures of the foregoing embodiments, and equivalent changes made according to the claims of the present invention still fall within the scope of the present invention.

**Claims**

1.  A transmission time interval selection method, comprising:

    setting, by a user equipment, transmission power of a to-be-sent random access preamble when performing random access;
    obtaining a power margin according to the transmission power of the to-be-sent random access preamble; and
    selecting a transmission time interval type of a corresponding enhanced dedicated channel resource according to the power margin.

2.  The transmission time interval selection method according to claim 1, wherein the obtaining the power margin according to the transmission power of the to-be-sent random access preamble specifically is:

    obtaining the power margin according to the transmission power of the to-be-sent random access preamble and a configured serving grant of a network side; or
    obtaining the power margin according to the transmission power of the to-be-sent random access preamble and an average serving grant; or
    obtaining the power margin according to the transmission power of the to-be-sent random access preamble and a channel parameter configured by a network side; or
    obtaining the power margin according to the transmission power of the to-be-sent random access preamble, a channel parameter configured by a network side, and transmission format indication information broadcasted by the network side.

3.  The transmission time interval selection method according to claim 2, wherein the obtaining the power margin according to the transmission power of the to-be-sent random access preamble and the channel parameter configured by the network side specifically comprises:

    obtaining, by the user equipment, a gain factor $\beta_{ed}$ of an enhanced dedicated physical data channel and a gain factor $\beta_c$ of a dedicated physical control channel that are configured by the network side; and
    obtaining, by the user equipment, the power margin according to the transmission power of the to-be-sent random access preamble, and the $\beta_{ed}$ and the $\beta_c$ that are configured by the network side.

4.  The transmission time interval selection method according to claim 2, wherein the obtaining the power margin according to the transmission power of the to-be-sent random access preamble, the channel parameter configured by the network side, and the transmission format indication information broadcasted by the network side specifically comprises:

    obtaining, by the user equipment, a gain factor $\beta_{ed}$ of an enhanced dedicated physical data channel according to the transmission format indication information broadcasted by the network side;
    obtaining, by the user equipment, a gain factor $\beta_c$ of a dedicated physical control channel configured by the network side; and
    obtaining, by the user equipment, the power margin according to the transmission power of the to-be-sent random access preamble, the $\beta_{ed}$ obtained according to the transmission format indication information, and the $\beta_c$ configured by the network side.

5.  The transmission time interval selection method according to claim 3 or 4, further comprising:

    obtaining, by the user equipment, a gain factor $\beta_{ec}$ of an enhanced dedicated physical control channel configured by the network side; and

obtaining, by the user equipment, the power margin according to the transmission power of the to-be-sent random access preamble, the $\beta_{ec}$, the $\beta_{ed}$, and the $\beta_{c}$.

6. The transmission time interval selection method according to claim 5, further comprising:

obtaining, by the user equipment, a gain factor $\beta_{hs}$ of a dedicated physical control channel for high speed downlink shared channel configured by the network side; and

obtaining, by the user equipment, the power margin according to the transmission power of the to-be-sent random access preamble, the $\beta_{ec}$, the $\beta_{ed}$, the $\beta_{c}$, and the $\beta_{hs}$.

7. The transmission time interval selection method according to claim 6, wherein the selecting the transmission time interval type of the corresponding enhanced dedicated channel resource according to the power margin specifically comprises:

determining whether the power margin obtained according to the transmission power of the to-be-sent random access preamble is greater than or equal to a set threshold;

if yes, selecting 2 ms as the transmission time interval of the enhanced dedicated channel resource; and

otherwise, selecting 10 ms as the transmission time interval of the enhanced dedicated channel resource.

8. A user equipment, comprising:

a control module, configured to set transmission power of a to-be-sent random access preamble when the user equipment performs random access;

a power margin obtaining module, configured to obtain a power margin according to the transmission power of the to-be-sent random access preamble; and

a resource selecting module, configured to select a transmission time interval type of a corresponding enhanced dedicated channel resource according to the power margin.

9. The user equipment according to claim 8, wherein the control module comprises:

a transmission power setting sub-module, configured to set the transmission power of the to-be-sent random access preamble; and

a parameter obtaining sub-module, configured to obtain a configured serving grant of a network side, or an average serving grant, or a reference E-TFCI broadcasted by a network side, or a channel parameter configured by a higher layer of a network side, wherein

the power margin obtaining module is specifically configured to obtain the power margin according to the transmission power of the to-be-sent random access preamble, and the serving grant, or the average serving grant, or the channel parameter configured by the network side, or according to the channel parameter configured by the network side and the transmission format indication information.

10. The user equipment according to claim 9, wherein the power margin obtaining module comprises:

a gain factor obtaining sub-module, configured to obtain, according to the transmission format indication information broadcasted by the network side, or directly obtain a gain factor $\beta_{ed}$ of an enhanced dedicated physical data channel configured by the network side, and obtain gain factors, namely, $\beta_{c}$, $\beta_{ec}$, and $\beta_{hs}$, of a dedicated physical control channel, an enhanced dedicated physical control channel, and a dedicated physical control channel for high speed downlink shared channel that are configured by the network side; and

a power margin calculating sub-module, configured to obtain the power margin according to the transmission power of the to-be-sent random access preamble, the $\beta_{ed}$, and the $\beta_{c}$; or obtain the power margin according to the transmission power of the to-be-sent random access preamble, the $\beta_{ec}$, the $\beta_{ed}$, and the $\beta_{c}$; or obtain the power margin according to the transmission power of the to-be-sent random access preamble, the $\beta_{ec}$, the $\beta_{ed}$, the $\beta_{c}$, and the $\beta_{hs}$.

11. The user equipment according to any one of claim 8 to 10, wherein the resource selecting module comprises:

a determining sub-module, configured to determine whether the power margin is greater than or equal to a set threshold; and

a selecting sub-module, configured to select 2 ms as the transmission time interval of the enhanced dedicated channel resource when a determination result of the determining sub-module is that the power margin is greater than or equal to the set threshold; or select 10 ms as the transmission time interval of the enhanced dedicated channel resource when a determination result of the determining sub-module is that the power margin is smaller than the set threshold.

A UE sets transmission power of a to-be-sent random access preamble

S1
1

Obtain a power margin according to the set transmission power

S1
2

Select a TTI type of a corresponding E-DCH resource according to the power margin

S1
3

FIG. 1

| Quantized amplitude ratios $\beta_{ed,\ k}\ /\ \beta_c$ | E-DPDCH modulation schemes which may be used in the same subframe |
|---|---|
| 168/15 | BPSK |
| 150/15 | BPSK |
| 134/15 | BPSK |
| 119/15 | BPSK |
| 106/15 | BPSK |
| 95/15 | BPSK |
| 84/15 | BPSK |
| 75/15 | BPSK |
| 67/15 | BPSK |
| 60/15 | BPSK |
| 53/15 | BPSK, 4PAM |
| 47/15 | BPSK, 4PAM |
| 42/15 | BPSK, 4PAM |
| 38/15 | BPSK, 4PAM |
| 34/15 | BPSK, 4PAM |
| 30/15 | BPSK, 4PAM |
| 27/15 | BPSK, 4PAM |
| 24/15 | BPSK, 4PAM |
| 21/15 | BPSK, 4PAM |
| 19/15 | BPSK, 4PAM |
| 17/15 | BPSK |
| 15/15 | BPSK |
| 13/15 | BPSK |
| 12/15 | BPSK |
| 11/15 | BPSK |
| 9/15 | BPSK |
| 8/15 | BPSK |
| 7/15 | BPSK |
| 6/15 | BPSK |
| 5/15 | BPSK |

FIG. 2

| Quantized amplitude ratios $\beta_{ec} / \beta_c$ | E-DPDCH modulation schemes which may be used in the same subframe |
|---|---|
| 239/15 | 4PAM |
| 190/15 | 4PAM |
| 151/15 | 4PAM |
| 120/15 | BPSK, 4PAM |
| 95/15 | BPSK, 4PAM |
| 76/15 | BPSK, 4PAM |
| 60/15 | BPSK, 4PAM |
| 48/15 | BPSK, 4PAM |
| 38/15 | BPSK, 4PAM |
| 30/15 | BPSK, 4PAM |
| 24/15 | BPSK, 4PAM |
| 19/15 | BPSK, 4PAM |
| 15/15 | BPSK, 4PAM |
| 12/15 | BPSK, 4PAM |
| 9/15 | BPSK |
| 8/15 | BPSK, 4PAM |
| 6/15 | BPSK, 4PAM |
| 5/15 | BPSK |

FIG. 3

Control module — 41

Power margin obtaining module — 42

Resource selecting module — 43

FIG. 4

## INTERNATIONAL SEARCH REPORT

| | |
|---|---|
| International application No. | |
| PCT/CN2013/071198 | |

**A. CLASSIFICATION OF SUBJECT MATTER**

H04W 74/08 (2009.01) i

According to International Patent Classification (IPC) or to both national classification and IPC

**B. FIELDS SEARCHED**

Minimum documentation searched (classification system followed by classification symbols)

IPC: H04W 74/-, H04W 36/-

Documentation searched other than minimum documentation to the extent that such documents are included in the fields searched

Electronic data base consulted during the international search (name of data base and, where practicable, search terms used)

CPRSABS, CNTXT, CNKI, VEN: preamble, power, margin/headroom, TTI/transmission time interval/transmit time interval/transmission timing interval/transmit timing interval, E-DCH/enhanced dedicated channel

**C. DOCUMENTS CONSIDERED TO BE RELEVANT**

| Category* | Citation of document, with indication, where appropriate, of the relevant passages | Relevant to claim No. |
|---|---|---|
| Y | CN 101174886 A (HUAWEI TECHNOLOGIES CO., LTD.) 07 May 2008 (07.05.2008) claims 2 and 4 | 1, 8, 11 |
| A | the whole document | 2-7, 9-10 |
| Y | CN 102119560 A (QUALCOMM INC.) 06 July 2011 (06.07.2011) claim 4 | 1, 8, 11 |
| A | the whole document | 2-7, 9-10 |
| A | US 2010220623 A1 (INTERDIGITAL PATENT HOLDINGS, INC.) 02 September 2010 (02.09.2010) claims 3 and 4 | 1-11 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 April 2013 (22.04.2013) | 09 May 2013 (09.05.2013) |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | ZHANG, Yanqing Telephone No. (86-10) 62411428 |

Form PCT/ISA/210 (second sheet) (July 2009)

**EP 2 800 441 A1**

## INTERNATIONAL SEARCH REPORT
Information on patent family members

| | International application No. |
|---|---|
| | PCT/CN2013/071198 |

| Patent Documents referred in the Report | Publication Date | Patent Family | Publication Date |
|---|---|---|---|
| CN 101174886 A | 07.05.2008 | WO 2007073683 A1 | 05.07.2007 |
| | | CN 101174886 B | 15.06.2011 |
| CN 102119560 A | 06.07.2011 | IN 201101043 P4 | 30.12.2011 |
| | | TW 201012267 A | 16.03.2010 |
| | | CA 2732110 A1 | 18.02.2010 |
| | | KR 20110055625 A | 25.05.2011 |
| | | US 8271014 B2 | 18.09.2012 |
| | | WO 2010019483 A1 | 18.02.2010 |
| | | KR 1173793 B1 | 16.08.2012 |
| | | EP 2314107 A1 | 27.04.2011 |
| | | JP 2011530963 A | 22.12.2011 |
| | | US 2010035647 A1 | 11.02.2010 |
| US 2010220623 A1 | 02.09.2010 | WO 2010101808 A1 | 10.09.2010 |
| | | TW 201129194 A | 16.08.2011 |
| | | AR 075774 A1 | 27.04.2011 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210021867